# EUROPÄISCHE PATENTSCHRIFT

(11) **EP 0 431 280 B1**
(45) Veröffentlichungstag und Bekanntmachung des Hinweises auf die Patenterteilung: **19.05.1993**
(21) Anmeldenummer: 90119361.5
(22) Anmeldetag: 09.10.1990
(51) Int. Cl.: B65H 18/08

(54) **Wickelmaschine für bandförmiges Material, insbesondere für einen beim Besäumen von Bändern anfallenden Saumstreifen**
Winding machine for web-like material, especially for a cut-off edge produced by trimming webs
Machine de bobinage pour matériaux en forme de bande, notamment pour un bord tombant produit lors du rognage de bandes

(30) Priorität: 15.11.1989 DE 3937992
(43) Veröffentlichungstag der Anmeldung: 12.06.1991
(73) Patentinhaber: SUNDWIGER EISENHÜTTE MASCHINENFABRIK GmbH & CO., D-58675 Hemer (DE)
(72) Erfinder: Koepe, Wilfried, W-4712 Werne (DE)
(74) Vertreter: Cohausz & Florack Patentanwälte

(56) Entgegenhaltungen:
- DE-C- 1 097 937
- US-A- 2 968 448

## Beschreibung

Die Erfindung bezieht sich auf eine Wickelmaschine für bandförmiges Material gemäß Oberbegriff des Anspruches 1.

Eine derartige Wickelmaschine ist aus der DE-C-1 097 937 bekannt.

Bei einer aus der Praxis bekannten Wickelmaschine ist die der Hohlwelle abgewandte Seitenscheibe über eine formschlüssige Steckkupplung mit der axial verschiebbaren Wickelwelle verbunden. Eine solche Wickelmaschine hat den Vorteil, daß sich der aufgewickelte Saumschrott allein durch Herausziehen der Wickelwelle aus dem Bereich zwischen den Seitenscheiben auswerfen läßt. Montagearbeiten an den Seitenscheiben sind also nicht erforderlich. Wie sich beim praktischen Betrieb herausgestellt hat, steht diesem Vorteil der Nachteil gegenüber, daß die Kupplung zwischen der Wickelwelle und der der Hohlwelle abgelegenen Seitenscheibe einem hohen Verschleiß unterliegt, weil insbesondere bei Wickelmaschinen mit großem Scheibendurchmesser die Trägheitsmasse der über die Kupplung zu beschleunigenden und abzubremsenden Seitenscheibe groß ist. Aber nicht nur die Kupplung, sondern auch die Seitenscheibe selbst unterliegt einem hohen Verschleiß, denn nach dem Anwickeln wird das Drehmoment im wesentlichen zwischen der Seitenscheibe und den Seitenkanten des aufzuwickelnden Bandes übertragen. Ist die Kupplung nicht mehr wirksam, kommt es zu einer Reibung zwischen der Seitenscheibe und den Kanten des aufgewickelten Saumschrottes und damit zu einem Verschleiß.

Eine andere Wickelmaschine für bandförmiges Schrottmaterial ist in der DE-PS 10 97 937 beschrieben. Diese bekannte Wickelmaschine besteht aus einer axial verstellbaren, angetriebenen Wickelwelle und in seitlichen Lagerböcken drehbar gelagerten, angetriebenen Seitenscheiben. Bei dieser gattungsgemäßen Wickelmaschine ist die Wickelwelle in einer axial fixierten Hohlwelle axial verschiebbar und mit der Hohlwelle über eine Kupplung zur Übertragung des Drehmomentes gekuppelt. Hierbei erfolgt der Antrieb der Seitenscheiben infolge der Reibung der mit den Seitenscheiben verbundenen Muffenelemente mit der angetriebenen Wickelwelle. Dieser reibschlüssige Antrieb hat jedoch den Nachteil eines hohen Verschleißes, insbesondere durch die Übertragung des sehr hohen Anfangs-Drehmoments beim Anwickeln und beim Stillsetzen der Wickelwelle, bedingt durch die Trägheitsmasse der einen großen Durchmesser aufweisenden Seitenscheiben.

Der Erfindung liegt die Aufgabe zugrunde, eine Wickelmaschine der eingangs genannten und zuvor näher beschriebenen Art zu schaffen, bei der der antriebsmäßige Gleichlauf zwischen der Wickelwelle und den beiden Seitenscheiben auf Dauer gewährleistet ist.

Diese Aufgabe wird erfindungsgemäß dadurch gelöst, daß die der Hohlwelle abgewandte andere Seitenscheibe über einen weiteren Antriebszug entweder unmittelbar mit dem die Hohlwelle antreibenden Antrieb oder einem weiteren Antrieb drehstarr verbunden ist.

Bei der erfindungsgemäßen Wickelmaschine erfolgt also der Antrieb der der Hohlwelle abgewandten anderen Seitenscheibe formschlüssig. Wegen des formschlüssigen Antriebes ist zwar der Herstellungsaufwand größer, auf die Dauer gesehen ist der Aufwand aber wegen des wegfallenden Instandhaltungsaufwandes durch den bei der erfindungsgemäßen Wickelmaschine deutlich geringeren Verschleiß geringer.

Besonders vorteilhaft ist es, wenn zusätzlich zwischen der in Betriebsstellung befindlichen Wickelwelle und der anderen Seitenscheibe eine, insbesondere formschlüssige Kupplung zur Übertragung eines Drehmomentes vorgesehen ist. Bei dieser Ausgestaltung erfolgt also die Übertragung des Drehmomentes parallel. Das bedeutet, daß der direkte Antrieb vergleichsweise schwach dimensioniert sein kann. Er braucht lediglich für die Drehmomentdifferenz, die bei der herkömmlichen, ausschließlich zwischen der Wickelwelle und der anderen Seitenscheibe vorgesehenen Kupplung zu deren frühzeitigem Verschleiß wegen Überlastung führte, und bei zwei separaten Antrieben für die Drehzahlsynchronisation ausgelegt zu sein.

Nach einer weiteren Ausgestaltung der Erfindung weist der gemeinsame Antrieb für die Hohlwelle und die andere Seitenscheibe eine parallel zur Wickelwelle angeordnete Antriebswelle auf, die über Antriebselemente einerseits mit der Hohlwelle und andererseits mit der anderen Seitenscheibe antriebsmäßig verbunden ist.

Im folgenden wird die Erfindung anhand einer ein Ausführungsbeispiel darstellenden Zeichnung näher erläutert.

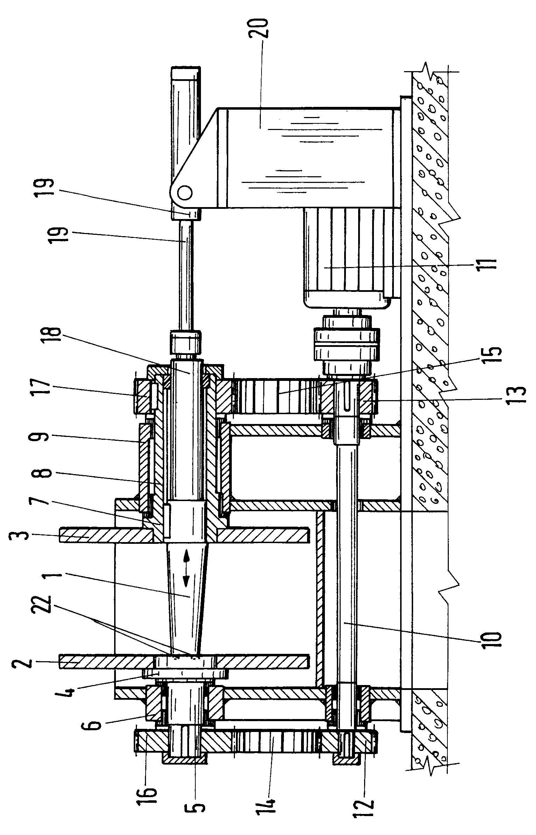

Die Zeichnung zeigt im Axialschnitt schematisch eine Wickelmaschine für den bei Besäumscheren der Bänder anfallenden Saumschrott.

Die Wickelmaschine weist eine konische Wickelwelle 1 und zwei an beiden Enden der Wickelwelle 1 angeordnete Seitenscheiben 2,3 auf. Die Seitenscheibe 2 ist auf einem Flansch 4 einer Antriebswelle 5 befestigt, die in einem Lagerbock 6 drehbar aber axial unverschieblich gelagert ist. Die Seitenscheibe 3 ist an einem Flansch 7 einer als Antriebswelle dienenden Hohlwelle 8 befestigt, die drehbar aber axial fest in einem Lagerbock 9 gelagert ist. In den Lagerböcken 6,9 ist eine parallel zur Wickelwelle 1 angeordnete Antriebswelle 10 gelagert, die von einem Antriebsmotor 11 angetrieben ist und die über Antriebselemente, und zwar auf ihr sitzende Treibrollen 12,13, Treibriemen 14,15 und Treibrollen 16,17 auf der Antriebswelle 5 und der Hohlwelle 8 antriebsmäßig mit den Seitenscheiben 2,3 verbunden ist.

Die konische Wickelwelle 1 ist über ein Zwischenstück 18 in der Hohlwelle 8 mit einer Zylinderkolbeneinheit 19 als Stellvorrichtung, die in einem Ständer 20 gehalten ist, axial verschiebbar in der Hohlwelle 8 gelagert, so daß sie aus dem Bereich zwischen den Seitenscheiben 2,3 völlig herausziehbar ist. Zwischen der Hohlwelle 8 und der Wickelwelle 1 ist eine formschlüssige Kupplung in Form einer Paßfeder vorgesehen. Bei Antrieb der Hohlwelle 8 wird deshalb auch die Wickelwelle 1 mitgenommen. An ihrer Stirnseite weist die Wickelwelle 1 Klauen 22 auf, die formschlüssig in entsprechende Ausnehmungen des Flansches 4 eingreifen. Auf diese Art und Weise wird erreicht, daß ein Drehmoment vom Antrieb 11 nicht nur unmittelbar über die Antriebswelle 10 auf die Seitenscheibe 2, sondern auch mittelbar über die Hohlwelle 8 und die Wickelwelle 1 auf die Seitenscheibe 3 übertragen wird. Bei der Dimensionierung der beiden parallelen Antriebe kann diese Aufteilung des zu übertragenden Drehmomentes mit dem Ziel berücksichtigt werden, daß der direkte Antrieb über die Antriebswelle 10 möglichst klein gehalten wird, daß aber die Kupplung zwischen der Wickelwelle 1 und der Seitenscheibe 2 nicht überlastet wird.

## Patentansprüche

1. Wickelmaschine für bandförmiges Material, insbesondere für einen beim Besäumen von Bindern anfallenden Saumstreifen, bestehend aus einer axial verstellbaren, angetriebenen Wickelwelle (1) und in seitlichen Lagerböcken (6,9) drehbar gelagerten, angetriebenen Seitenscheiben (2,3), wobei die Wickelwelle (1), die in einer unmittelbar angetriebenen, in einem der seitlichen Lagerböcke (9) gelagerten, axial fixierten Hohlwelle (8) über eine, insbesondere formschlüssige Kupplung zur Übertragung des Drehmomentes gekuppelt ist, aus dem Bereich zwischen den Seitenscheiben (2,3) herausziehbar ist, und wobei die der Hohlwelle (8) benachbarte eine Seitenscheibe (3) auf der Hohlwelle (8) fixiert ist,
**dadurch gekennzeichnet** , daß die der Hohlwelle (8) abgewandte andere Seitenscheibe (2) über einen weiteren Antriebszug entweder unmittelbar mit dem die Hohlwelle (8) antreibenden Antrieb (11) oder einem weiteren Antrieb drehstarr verbunden ist.

2. Wickelmaschine nach Anspruch 1,
**dadurch gekennzeichnet** , daß zwischen der in Betriebsstellung befindlichen Wickelwelle (1) und der anderen Seitenscheibe (2) eine, insbesondere formschlüssige Kupplung zur Übertragung des Drehmomentes vorgesehen ist.

3. Wickelmaschine nach Anspruch 1 oder 2,
**dadurch gekennzeichnet** , daß der gemeinsame Antrieb (11) für die Hohlwelle (8) und die andere Seitenscheibe (2) eine parallel zur Wickelwelle angeordnete Antriebswelle (10) aufweist, die über Antriebselemente (12-17) einerseits mit der Hohlwelle (8) und andererseits mit der anderen Seitenscheibe (2) antriebsmäßig verbunden ist.

## Claims

1. A winding machine for ribbon-shaped material, more particularly for an edge strip accumulating from the edging of ribbons, the machine comprising an axially adjustable driven winding shaft (1) and driven side discs (2, 3) rotatably mounted in lateral bearing blocks (6, 9), wherein the winding shaft (1), which is coupled in a directly driven axially fixed hollow shaft (8), mounted in one of the lateral bearing blocks (9), via a more particularly positive coupling for the transmission of the torque, can be drawn out of the zone between the side discs (2, 3), one side disc (3) adjacent the hollow shaft (8) being fixed on the hollow shaft (8), characterized in that the other side disc (2) remote from the hollow shaft (8) is connected stiff against torsion via a further driving train either directly to the drive (11) driving the hollow shaft (8) or to a further drive.

2. A winding machine according to claim 1, characterized in that a more particularly positive coupling for the transmission of the torque is provided within the winding shaft (1) in the operating position and the other side disc (2).

3. A winding machine according to claims 1 or 2, characterized in that the common drive (11) for the hollow shaft (8) and the other side disc (2) has a driving shaft (10) which is disposed parallel with the winding shaft and which is drivably connected via driving elements (12-17) on the one hand to the hollow shaft (8) and on the other hand to the other side disc (2).

## Revendications

1. Machine de bobinage pour matériau en forme de bande, en particulier pour un bord tombant produit lors du rognage de feuillards, constituée d'un arbre d'enroulement (1) et de disques latéraux entraînés (2, 3) montés à rotation dans des paliers latéraux (6, 9), l'arbre d'enroulement (1), qui est accouplé dans un arbre creux (8) entraîné directement fixé axialement monté dans l'un des paliers latéraux (9), par l'intermédiaire d'un accouplement en particulier à engagement positif pour la transmission du couple, pouvant être extrait de la région entre les disques latéraux (2, 3), et le disque latéral (3) qui est adjacent à l'arbre creux (8) étant fixé à l'arbre creux (8),
caractérisée en ce que l'autre disque latéral (2) écarté de l'arbre creux (8) est relié par un autre train d'entraînement soit directement à l'entraînement (11) entraînant l'arbre creux (8) soit rigidement à un autre entraînement.

2. Machine de bobinage selon la revendication 1,
caractérisée en ce qu'un accouplement, en particulier à engagement positif, est prévu pour la transmission du couple entre l'arbre d'enroulement (1) se trouvant en position de fonctionnement et l'autre disque latéral (2).

3. Machine de bobinage selon la revendication 1 ou 2,
caractérisée en ce que l'entraînement commun (11) pour l'arbre creux (8) et l'autre disque latéral (2) présente un arbre moteur (10) disposé parallèle à l'arbre d'enroulement qui est relié à entraînement par l'intermédiaire d'éléments moteurs (12-17) d'une part à l'arbre creux (8) et d'autre part à l'autre disque latéral (2).
